# FASCICULE DE BREVET EUROPEEN

(11) **EP 3 481 613 B1**
(45) Date de publication et mention de la délivrance du brevet: **13.11.2019**
(21) Numéro de dépôt: 17745428.7
(22) Date de dépôt: 05.07.2017
(51) Int. Cl.: B29B 11/16, B64C 7/02

(54) **PROCÉDÉ DE FABRICATION D'UNE PRÉFORME POUR MATÉRIAUX COMPOSITES**
VERFAHREN ZUR HERSTELLUNG EINER VORFORM FÜR VERBUNDWERKSTOFFE
METHOD FOR MANUFACTURING A PREFORM FOR COMPOSITE MATERIALS

(30) Priorité: 06.07.2016 FR 1656501
(43) Date de publication de la demande: 15.05.2019
(73) Titulaire: Safran Nacelles, 76700 Gonfreville-l'Orcher (FR)
(72) Inventeur: PROVOST, Benjamin, 76700 GONFREVILLE L'ORCHER (FR); DESJOYEAUX, Bertrand, 76700 GONFREVILLE L'ORCHER (FR); LOUCHARD, Sébastien, 76700 GONFREVILLE L'ORCHER (FR); DEPEUX, Fabien, 76700 GONFREVILLE L'ORCHER (FR)
(74) Mandataire: Delorme, Nicolas
(86) Numéro de dépôt international: PCT/FR2017/051835
(87) Numéro de publication internationale: WO 2018/007756

(56) Documents cités:
- FR-A1- 2 995 557
- FR-A1- 3 000 969
- US-A1- 2012 100 321

## Description

La présente invention concerne un procédé de fabrication d'une préforme comprenant des couches de fibres superposées, prévue pour former après cuisson d'une résine d'imprégnation un matériau composite, ainsi qu'une préforme obtenue avec un tel procédé, et un élément de nacelle de turboréacteur obtenu avec ces préformes.

Pour réaliser des éléments de structure résistants et légers, en particulier dans le domaine aéronautique, il est connu de préparer une préforme textile à partir de fibres sèches, notamment des fibres de carbone, par un drapage de pièces comme des tissus, des rubans de fibres ou des tresses, qui sont déposées successivement sur une forme de moulage pour former des couches superposées.

Les couches de la préforme peuvent être liées entre elles par différents moyens, notamment par une résine de consolidation, par un agent thermofusible comme un composé organique thermoplastique, ou par une couture.

La préforme est ensuite imprégnée d'une résine, notamment par injection suivant un procédé de moulage de composite liquide appelé « LCM » (abréviation des termes anglais « Liquid Composit Molding »), ou de moulage par transfert de résine appelé « RTM » (abréviation des termes anglais « Resin Transfert Molding »). En variante, on peut réaliser une telle préforme avec des pièces de fibres pré-imprégnées de résine.

Après cuisson de la résine on obtient une pièce légère qui peut présenter des formes variées, comprenant des fibres dont la densité et l'orientation sont ajustées en fonction des contraintes locales, afin d'obtenir des caractéristiques de résistance mécanique élevées.

Dans le domaine aéronautique on réalise des pièces de ce type pour former des éléments de nacelle de turboréacteur, notamment des pièces en composites monolithiques à fibres continues, tels que des cadres de structure d'inverseur de poussée, ou encore des panneaux composites sandwich acoustiques ou non tels que des capots acoustiques d'inverseurs de poussée, des lèvres d'entrée d'air ou des capots.

Pour réaliser une pièce avec une forme non développable, un procédé de réalisation connu consiste à draper sur une forme de moulage présentant une surface correspondante non développable, des tissus de fibres qui sont déformés pour s'adapter à cette forme de moulage en évitant les plissures. Ce procédé est couteux et délicat, notamment pour réaliser des formes géométriques accidentées ou complexes.

Un autre procédé connu de fabrication d'une pièce de révolution comprenant une forme finale qui ne peut pas être développée, présenté notamment par le document WO-A2-2014044963, consiste à concevoir un mandrin donnant une forme initiale prédéfinie par rapport à la forme finale de la pièce de révolution, à tisser des fibres entre elles en trame et chaine, enroulées sur ce mandrin, et enfin à appliquer une transformation de cette préforme tissée pour obtenir la forme finale correspondant à la pièce à obtenir.

Ce procédé n'est adapté qu'aux formes de révolution, et est limité en ce qui concerne les orientations de fibres sur la pièce finale, par les limitations qu'offre le tissage.

Par ailleurs les procédés de drapage par dépose automatisée de fibres ou de couches de fibres par des têtes de drapage, tels que décrits dans le document FR 3 000 969, permettent de réduire les couts de drapage, et de disposer les fibres ou couches de fibres selon toutes orientations sur des formes non développables, qui peuvent être de révolution ou non, afin d'optimiser la masse et d'améliorer les couts de fabrication.

Toutefois avec ces procédés il n'est pas possible avec les machines de drapage automatisé de réaliser certaines formes particulières de la préforme, comme notamment des petits rayons ou des angles trop fermés entre deux parties, du fait de l'encombrement des rouleaux de dépose des fibres dont les dimensions ne permettent pas d'accéder et d'appliquer les fibres sur des surfaces dans des espaces restreints.

La présente invention a notamment pour but d'éviter ces inconvénients de la technique antérieure.

A cet effet elle propose un procédé dénommé par l'acronyme « SCALED FP » (abréviation des termes anglais « Specific Curves Automated Lamination and Extended Dimensions Fiber Placement », qui veut dire drapage automatisé de fibres sur forme aux courbes spécifiques et déploiement aux dimensions finales.

Elle propose à cet effet un procédé de fabrication d'une préforme présentant une forme non développable, comprenant plusieurs couches de renfort de fibres superposées pour former une pièce en matériaux composites présentant une forme finale comprenant autour d'un axe longitudinal un rayon global de courbure final, et dans au moins une section longitudinale des tronçons courbes formant des rayons de pliage reliant des tronçons sensiblement rectilignes, ce procédé étant remarquable en ce qu'il comporte une étape de dépose de couches successives sur une surface d'un outillage de drapage donnant une forme initiale sensiblement de révolution présentant autour de l'axe longitudinal un rayon global de courbure initial, puis la forme initiale comportant autour de cet axe un contour ouvert, une étape de déploiement de la préforme en augmentant le rayon global de courbure initial jusqu'au rayon global de courbure final, afin de refermer les rayons de pliage des tronçons courbes.

Un avantage de ce procédé de fabrication est que par le déploiement de la forme initiale pour augmenter son rayon global de courbure, on obtient dans la section longitudinale une modification des rayons de pliage reliant des tronçons rectilignes, qui peut en particulier resserrer ces rayons par un changement de l'inclinaison de tronçons formant des cônes. On peut de cette manière obtenir sur la forme finale entre les tronçons rectilignes des angles fortement resserrés ou des rayons de pliage réduits, qu'il ne serait pas possible d'obtenir directement à partir des machines d'enroulement sur un mandrin habituellement utilisées.

Le procédé de fabrication selon l'invention peut comporter de plus une ou plusieurs des caractéristiques suivantes, qui peuvent être combinées entre elles.

De préférence, et en complément, avant l'étape de déploiement si la forme initiale comporte autour de l'axe longitudinal un contour circulaire fermé, le procédé comporte une étape de coupe de la préforme qui donne le contour ouvert.

Avantageusement, le procédé comporte une étape préliminaire de calcul d'une première couche de renfort limite au niveau d'un tronçon courbe, qui est la couche présentant dans la section longitudinale en fonction de l'orientation de ses fibres et de son positionnement dans l'épaisseur du tronçon par rapport aux autres couches de renfort, le plus faible changement de sa longueur développée lors du déploiement de la préforme.

Avantageusement, le procédé comporte une étape préliminaire de calcul d'une deuxième couche de renfort limite au niveau d'un tronçon courbe, qui est la couche présentant dans la section transversale en fonction de l'orientation de ses fibres et de son positionnement dans l'épaisseur du tronçon par rapport aux autres couches de renfort, le plus faible changement de sa longueur développée lors du déploiement de la préforme.

En particulier, le rapport entre le rayon global de courbure final et initial peut être compris entre 1,5 et 4.

L'invention a aussi pour objet une préforme comprenant plusieurs couches de renfort de fibres superposées, prévue pour former après cuisson d'une résine d'imprégnation une pièce en matériaux composites présentant une forme finale, qui est fabriquée conformément à un procédé comprenant l'une quelconque des caractéristiques précédentes.

Avantageusement chaque tronçon courbe présente une longueur développée moyenne dans la section longitudinale ou transversale, sensiblement égale à la longueur développée de la couche limite associée dans cette section.

En particulier, la préforme peut comporter autour de l'axe longitudinal dans la forme initiale une partie conique reliée par des tronçons courbes à des tronçons cylindriques, cette partie conique se redressant pour donner dans la forme finale une partie sensiblement plane.

En particulier, la préforme peut comporter une épaisseur comprise entre 1 et 8mm, et des rayons de pliage des tronçons courbes compris entre 5 et 30mm.

En particulier, la préforme peut comporter des singularités géométriques locales, comme des bossages.

En particulier, la préforme peut comporter une forme initiale présentant un contour circulaire fermé autour de l'axe longitudinal, prévue pour donner une forme finale formant autour de cet axe un secteur inférieur ou égal à 180°.

En particulier, la préforme peut comporter un nombre de couches de renfort de fibres qui est variable.

En particulier, la préforme peut comporter au moins une couche comprenant des fibres orientées longitudinalement ou transversalement.

Avantageusement, la préforme comporte des fibres de couches superposées présentant majoritairement des orientations de 90°, +30° et -30°, par rapport à l'orientation de 0° qui est l'angle d'un plan passant par l'axe longitudinal.

L'invention a de plus pour objet une pièce de nacelle de turboréacteur réalisée à partir d'une préforme comprenant l'une quelconque des caractéristiques précédentes.

L'invention a de plus pour objet une pièce de nacelle de turboréacteur réalisée par superposition partielle ou totale d'au moins deux préformes comprenant l'une quelconque des caractéristiques précédentes.

Dans ce cas, au moins une des préformes peut présenter une épaisseur décroissante vers l'extrémité de la zone de recouvrement avec l'autre préforme.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente la forme finale sensiblement de révolution d'une préforme obtenue avec un procédé suivant l'invention ;
- la figure 1a présente une section longitudinale de cette forme finale ;
- la figure 2 présente la forme finale d'une préforme suivant une variante comportant un évasement local et un bossage ;
- les figures 3a et 3b présentent respectivement une forme initiale et une forme finale obtenues avec le procédé suivant l'invention ;
- les figures 3c et 3d présentent respectivement en variante une forme initiale et une forme finale obtenues avec le procédé suivant l'invention ;
- les figures 4a et 4b présentent respectivement une forme initiale et une forme finale obtenues avec le procédé suivant l'invention, montrant des orientations des fibres des couches superposées ;
- Les figures 5a et 5b présentent respectivement une section longitudinale d'une forme finale et d'une forme initiale montrant les dispositions de différentes couches de fibres dans l'épaisseur avec une séquence d'empilement de ces couches ;
- les figures 6a et 6b présentent respectivement une forme initiale et une forme finale comportant des bossages ; et
- les figures 7a, 7b, 7c et 7d sont différentes coupes de ces formes initiale et finale, respectivement dans les plans longitudinaux VIIa-VIIa, VIIb-VIIb, VIIc-VIIc et VIId-VIId.

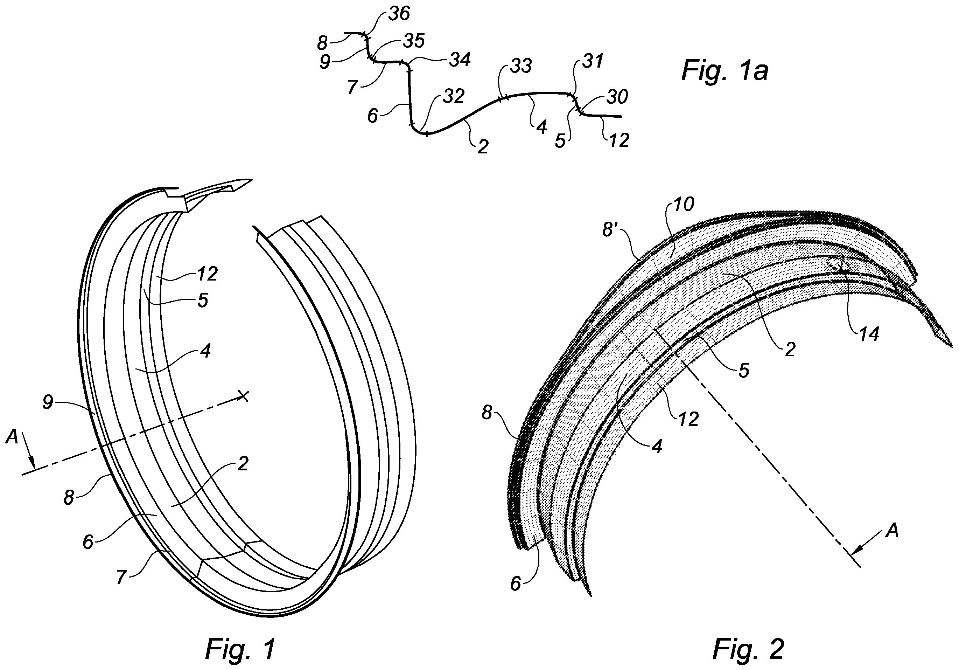

Les figures 1 et 1a présentent la forme finale de la surface d'une pièce s'étendant suivant un secteur de 180° autour d'un axe longitudinal A, comprenant une succession de parties cylindriques 4, 7, 8, de parties coniques 2, 5, 12, et de parties planes radiales 6, 9.

Ces différentes parties et zones sont reliées entre elles par des rayons de raccordement 30, 31, 32, 33, 34, 35, 36, présentant dans un plan de coupe longitudinal des rayons de pliage réduits pour former des angles prononcés. Les rayons de pliage peuvent en particulier présenter des valeurs comprises entre 5 et 30 millimètres, suivant ce que permet le pliage des fibres des couches superposées de la préforme.

La forme finale présente une géométrie complexe formant une surface non développable, qui appliquée à une préforme ne peut pas être drapée directement avec les moyens de drapage automatisés conventionnels de dépose de fibres continues. Cette difficulté est due en particulier aux angles fermés entre les parties, tels que les parties adjacentes aux rayons de raccordement 30, 33, 35, et aux rayons trop petits qui ne permettent pas l'accès aux têtes de drapage classiques, ainsi qu'aux variations importantes de rayon global de courbure des différents tronçons par rapport à l'axe longitudinal.

Il est entendu que le vocable développable se rapportant à la surface de la préforme, désigne une surface courbe que l'on conçoit comme pouvant se développer par un dépliage pour venir entièrement dans un même plan. Il s'agit donc au minimum d'une surface permettant en tout point de faire passer une droite appartenant à cette surface. A l'inverse une surface non développable ne peut pas quel que soit le pliage, le dépliage, le déploiement ou l'extension, venir sans découpe ni plissure entièrement dans un même plan.

La figure 2 présente un autre exemple de forme complexe de pièce réalisable selon le procédé de l'invention, comprenant une forme générale autour d'un axe longitudinal A incluant des zones qui ne sont pas de révolution autour de cet axe, ni continues avec la forme générale.

La forme complexe comporte un rebord extérieur 8 partiellement cylindrique, présentant localement une excroissance 8' continue avec cette partie cylindrique, qui est raccordée à la pièce par une extension 10 vers l'extérieur du plan radial 9.

La forme complexe présente également une singularité géométrique locale qui est un bossage 14 sur une partie cylindrique 4 de la pièce. De la même manière cette préforme non développable n'est pas réalisable directement avec des moyens de drapage automatisé de placement de fibres conventionnels.

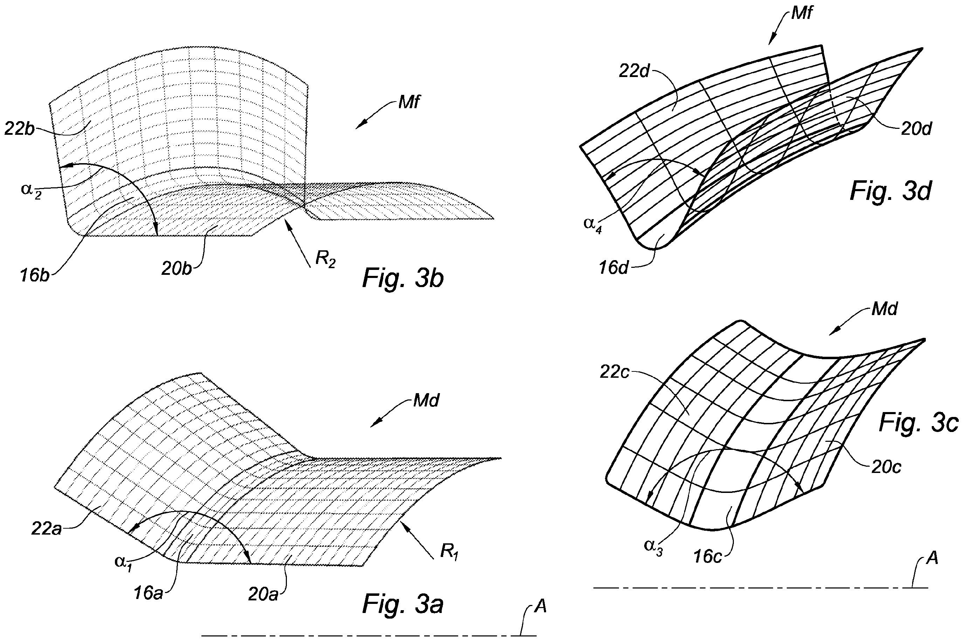

Les figures 3a et 3b présentent un détail de zone de pièce réalisable selon l'invention, montrant respectivement une surface de forme de drapage initiale Md correspondant avec la surface de forme finale Mf de la pièce. La forme initiale Md permet le drapage par un moyen de drapage automatisé.

La forme finale Mf comporte autour d'un axe A longitudinal une partie sensiblement dans un plan radial 22b, et une partie sensiblement cylindrique 20b de rayon R2. Sur la forme initiale Md la partie correspondante sensiblement cylindrique 20a comporte un rayon R1. Les deux parties forment entre elles dans un plan longitudinal un angle α2 égal à 90°. Le rapport des rayons R2/R1 lors du déploiement est appelé rapport de similitude K, égal à 2 dans cet exemple.

Sur la forme initiale Md, la partie conique 22a deviendra une partie radiale 22b. L'angle α1 formé entre les parties 20a et 22a dans un plan longitudinal, est tel que sin(180°- α1) = 1/K = R1/R2. On a donc α1 = 150°.

Dans un plan longitudinal, le rayon de raccordement initial 16a entre les parties 20a et 22a devient après le déploiement le rayon de raccordement final 16b entre les parties 20b et 22b.

Si le rayon de raccordement final 16b est un arc de cercle, le rayon de raccordement initial 16a n'est pas parfaitement circulaire, mais tel que les segments longitudinaux de ces rayons initiaux 16a et final 16b sont de même longueur curviligne, et qu'à toute distance curviligne correspondante entre ces deux segments le rapport des rayons porteurs circonférentiels respectifs de chacun des points est égal au coefficient de similitude K choisi.

La forme selon la figure 3a étant plus ouverte, on obtient un angle de 150° entre les deux parties adjacentes à draper qui donne une accessibilité compatible avec les machines actuelles de drapage automatiques de placement de fibres.

On peut avec le procédé suivant l'invention obtenir des pièces réalisées par drapage automatisé de placement de fibres ayant différents angles finaux entre des parties adjacentes, qui peuvent en particulier être très resserrés, notamment inférieurs à 90°, avec un rayon de pliage les reliant qui est très faible.

Dans certains cas on peut choisir un rapport de similitude K plus grand que 2 de façon à ce que l'angle initial entre deux parties adjacentes soit suffisamment ouvert, au moins de 150°, pour un drapage aisé avec une machine de drapage automatisé.

Les figures 3c et 3d présentent respectivement une forme initiale Md propre au drapage automatisé, et une forme finale Mf associée composée de deux parties coniques de directions opposées 20d, 22d, reliées par un rayon de raccordement réduit 16d.

Pour un angle final α4 entre les deux parties coniques 20d, 22d d'une valeur de 60°, en choisissant un rapport de similitude K = 3,5, la forme de drapage présente entre les parties 20c et 22c un angle α = 2xacos(cos(60°/2)/K) soit environ 151°, ce qui permet de draper la pièce sur la forme de drapage initial Md avec un procédé de drapage automatisé.

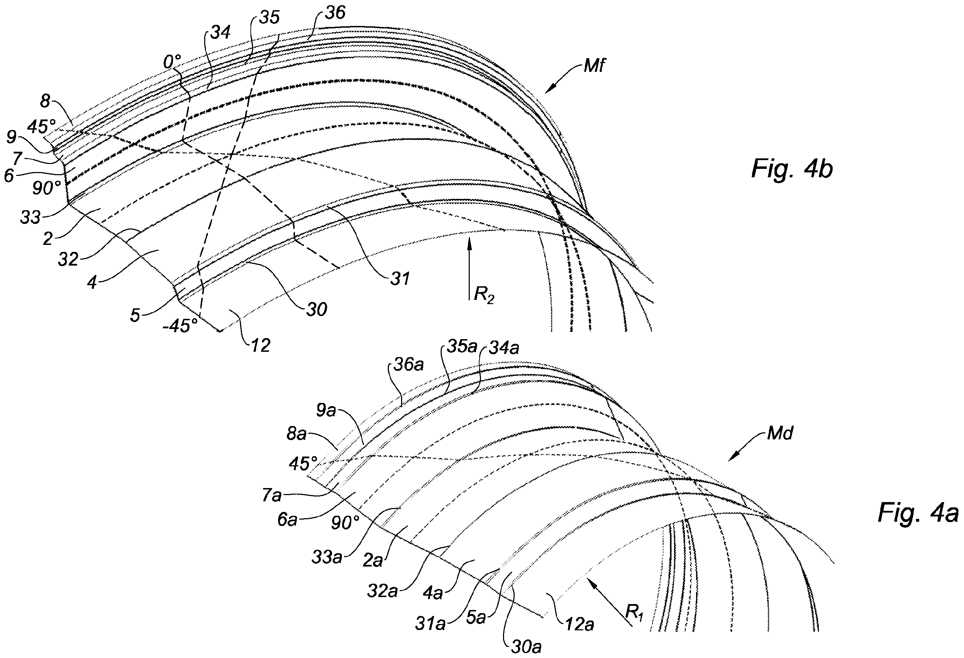

Les figures 4a et 4b présentent respectivement la forme initiale et la forme finale d'une pièce similaire à celle présentée figure 1, comportant une partie cylindrique arrière 12 de rayon global de courbure initial R1 et final R2.

Différentes orientations de couches de fibres utiles pour donner la résistance mécanique nécessaire sont représentées, notamment l'orientation longitudinale 0°, l'orientation circonférentielle 90°, et des orientations +45° et - 45° inclinées par rapport à ces orientations principales, représentées à titre d'exemple. Tous les autres angles d'inclinaison sont possibles.

Sur la forme finale les angles fermés entre les parties adjacentes cylindriques 2, 7, 12 et radiales 5, 6, 9, ne permettent pas de draper la surface directement avec un moyen de drapage automatisé de placement de fibres, comprenant une tête de dépose qui ne peut pas accéder convenablement à ces zones pour y déposer des fibres.

Pour permettre le drapage de la pièce avec toutes les orientations souhaitées avec un moyen de drapage automatisé de placement de fibres, dans les angles fermés en particulier, on utilise un outillage de drapage suivant la forme initiale Md présentée figure 4a, qui est une transformation par rapport à la forme finale Mf de la figure 4b afin d'ouvrir les angles fermés pour les amener à des valeurs d'au moins 150°.

Sur une telle forme de drapage initiale on peut appliquer toutes les règles habituelles relatives au drapage automatique par placement de fibres telles que dispositions de rubans parallèles, dispositions de séries de rubans angulés, orientation de séries de rubans sensiblement curvilignes, réorientation pour limiter la courbure au sein d'un ruban, appelée steering en langue anglaise, choix de trajectoires les plus proches des tangentes à surface sur la largeur d'un ruban ou d'une série de rubans, crénelage et recouvrement partiel angulé entre deux séries de rubans pour conserver tout au long de la circonférence de la pièce l'orientation de la couche sensiblement selon le même angle par rapport à 0°.

Avantageusement, le procédé de fabrication peut comporter une étape préliminaire de détermination d'une première couche de renfort limite au niveau d'un tronçon courbe comprenant un rayon de pliage reliant deux tronçons sensiblement rectilignes, qui dans un plan longitudinal en fonction de l'orientation de ses fibres et de son positionnement dans l'épaisseur du tronçon par rapport aux autres couches de renfort, entrave l'augmentation de longueur développée lors de la transformation entre la forme de drapage initiale et la forme finale de la préforme.

D'une manière similaire le procédé de fabrication peut comporter une étape préliminaire de détermination d'une deuxième couche de renfort limite au niveau d'un tronçon courbe, qui dans la section transversale en fonction de l'orientation de ses fibres et de son positionnement dans l'épaisseur du tronçon par rapport aux autres couches de renfort, entrave l'augmentation de longueur développée lors de la transformation entre la forme de drapage initiale et la forme finale de la préforme.

On obtient pour ces couches limites dans leurs directions respectives la plus petite variation des longueurs développées, ce qui permet de calculer à l'avance la forme de drapage initiale de la préforme permettant de draper sur celle-ci l'ensemble des couches de fibres souhaitées, et d'obtenir lors du transfert une préforme adaptée à la forme finale de la pièce souhaitée.

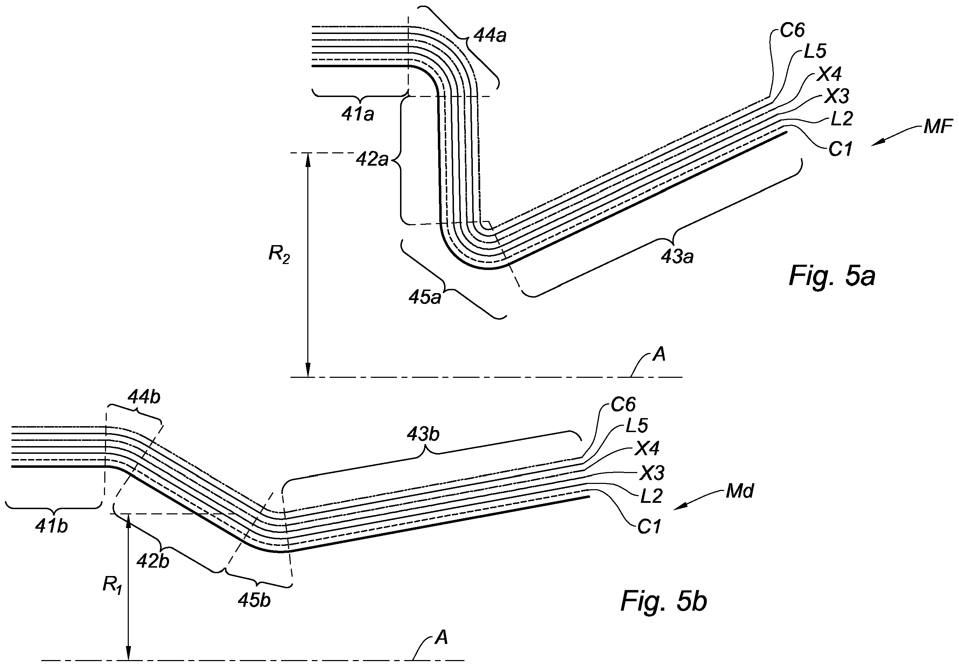

Les figures 5a et 5b présentent respectivement une section dans un plan longitudinal d'une forme finale Mf d'une pièce présentant un rayon moyen R2 autour de l'axe longitudinal A, et d'une forme initiale Md de la préforme correspondante présentant un rayon moyen R1.

La forme finale Mf comporte une partie cylindrique 41a, une partie plane radiale 42a et une partie conique 43a, liées les unes aux autres par des rayons de raccordement 44a, 45a. La pièce est composée de 6 couches de fibres superposées et repérées C1, L2, X3, X4, L5 et C6.

Les couches de fibres sont des couches continues, telles que obtenues par placement juxtaposé de rubans de fibres de carbone, de verre ou autre fibres minérales ou organiques, adaptés à la dépose par un moyen automatisé de placement de fibre.

A titre d'exemple, les couches d'extrémités C1, C6 sont des couches de fibres dans un plan transversal à 90°, les couches adjacentes L2, L5 sont des couches de fibres dans un plan longitudinal à 0°, les couches centrales X3, X4 sont des couches de fibres selon des orientations inclinées entre les deux orientations principales (par exemple +45° et -45°, ou +30° et -30°, ou autres angles symétriques ou non par rapport à une direction principale).

Lors du déploiement de la forme initiale Md vers la forme finale Mf, les fibres peuvent s'écarter entre elles dans le sens transversal à leur direction, ou se contracter suivant leur longueur par ondulation en couvrant une longueur plus courte sur la surface de la pièce, mais elles ne peuvent pas s'allonger à plus de 0,1 % ce qui n'est pas significatif.

La couche maitresse dans l'épaisseur, pour chacune des directions principales de courbure transversale et longitudinale, est définie dans une forme rayonnée et parallèle à une direction courbe, comme étant soit la plus à l'intérieur du rayon lorsque la courbure diminue lors de la transformation entre la forme initiale Md et la forme finale Mf, soit la plus à l'extérieur du rayon de courbure lorsque la courbure augmente lors de cette même transformation.

Ainsi dans l'exemple des figures 5a et 5b, dans le sens circonférentiel, la couche C1 circonférentielle au rayon moyen qui augmente lors de la transformation entre la forme initiale Md et la forme finale Mf, est la couche maitresse de transformation de circonférence. Les rayons circonférentiels de la forme de drapage sont calculés par rapport aux rayons internes de la couche C1 de forme finale.

Dans le sens longitudinal, au niveau des rayons de raccordement 44, 45, les angles se referment lors de la transformation entre la forme initiale Md et la forme finale Mf, les couches maitresses sont les couches externes aux zones courbes, soit la couche L5 pour le rayon de raccordement 44 et la couche L2 pour le rayon de raccordement 45.

La forme de drapage initiale Md est alors calculée en appliquant le coefficient de similitude K aux couches maitresses dans le sens circonférentiel pour le calcul des génératrices circonférentielles, et en positionnant ces génératrices à des distances telles que vu dans l'épaisseur de la préforme, les longueurs des segments longitudinaux des couches maitresses longitudinales sont identiques entre la forme de drapage initiale Md et la forme finale Mf.

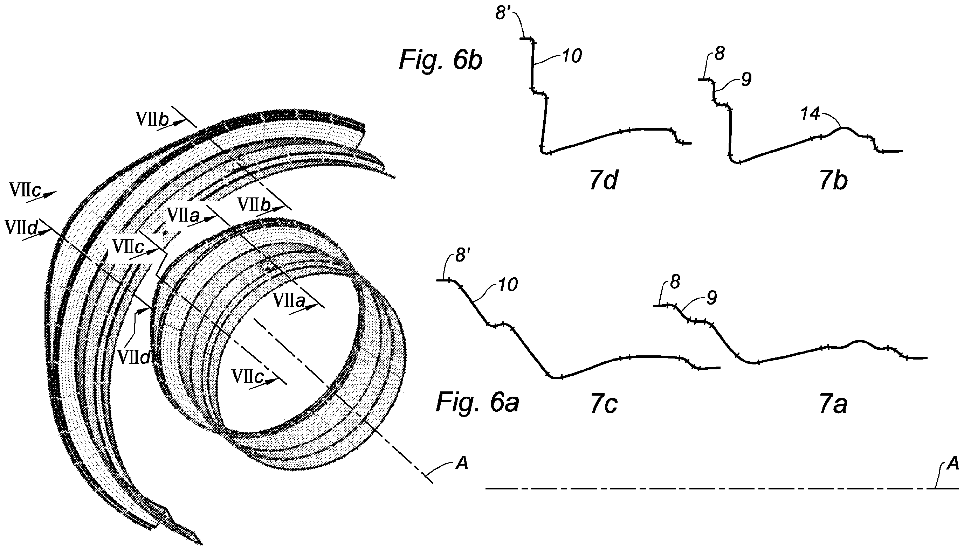

La figure 6a présente une forme initiale drapée sur un outillage de drapage présentant un contour fermé autour de l'axe longitudinal A, comportant sur la partie cylindrique 4 un bossage 14 tourné vers l'extérieur, ainsi qu'une excroissance locale de la partie cylindrique 8. Le rayon global de courbure initiale est R1.

La figure 6b présente la forme finale obtenue après une coupe de la forme initiale dans un plan longitudinal, puis un redressement afin d'obtenir une forme finale comportant un rayon global de courbure final R2 qui est le double du rayon global de courbure initial R1. La forme finale est disposée suivant un secteur de 180° autour de l'axe longitudinal A.

Les couples de figures 7a, 7b, et 7c, 7d montrent les sections longitudinales initiale de drapage et finale, relatives respectivement à la zone courante incluant le bossage local 14, et à la zone courante incluant l'excroissance locale 8. Les mêmes dispositions que précédemment s'appliquent entre la forme de drapage initiale et la forme finale ce qui permet avec le procédé de draper avec un moyen de drapage automatisé de dépose de rubans, une forme présentant des complexités qui ne sont pas de révolution.

D'une manière générale on peut réaliser une forme finale suivant un secteur différent de 180°, en particulier inférieur à 180°. On peut notamment réaliser un secteur de 120° afin de former un cercle complet en trois éléments similaires, ou de 90° avec un cercle complet en quatre éléments similaires.

D'une manière générale encore, le drapage peut être uniforme sur l'ensemble de la surface de la pièce, ou comporter des couches de fibres qui ne s'étendent pas sur la totalité de la surface.

D'une manière générale une pièce peut être formée par l'assemblage de deux préformes ou plus. L'assemblage peut être fait en superposant totalement une préforme au-dessus d'une autre.

L'assemblage peut être aussi réalisé par recouvrement partiel d'une zone périphérique d'une préforme sur une autre préforme. Dans ce cas, préférentiellement le nombre de couches d'au moins une des deux préforme est décroissant en allant vers l'extrémité de la préforme dans la zone de recouvrement selon un principe connu de l'homme de métier, afin de limiter les surépaisseurs et d'optimiser la continuité des propriétés mécaniques entre les deux préformes.

Pour ce dernier principe, typiquement on décroit le nombre de couches jusqu'à une seule couche de fibres ou deux couches de fibres, et on applique une dégressivité d'épaisseur de rapport longueur sur épaisseur compris entre trois et dix. Par exemple pour une couche d'épaisseur un, on décroit d'une couche toutes les dix unités de largeur.

D'une manière générale encore, le procédé et la pièce obtenue peuvent être réalisés à partir de rubans de fibres dites sèches, c'est à dire sans résine de consolidation, ou uniquement de fibres pourvues d'un produit permettant de faire adhérer les couches les unes aux autres lors du drapage.

La préforme peut-être compactée lors du formage sur la forme finale afin de calibrer les épaisseurs de couches. La pièce est ensuite consolidée par un procédé LCM tel que l'infusion, RTM, ou un autre procédé.

Optionnellement les rubans de fibres peuvent comprendre des fibres préalablement tissées ou tressées. L'invention n'est pas limitée aux préformes de fibres continues unidirectionnelles, elle peut contenir une partie de tissus de fibres tels que des taffetas, sergés, satins. Optionnellement, des renforts fibreux locaux peuvent faire partie de la séquence des couches de fibres de la pièce.

Le procédé peut utiliser des fibres préimprégnées de résine thermodurcissables, ou en variante des fibres préimprégnées de matrice thermoplastique, pouvant faire l'objet d'une consolidation thermomécanique pendant ou après la transformation vers la forme finale.

## Revendications

1. Procédé de fabrication d'une préforme présentant une forme non développable, comprenant plusieurs couches de renfort de fibres superposées pour former une pièce en matériaux composites présentant une forme finale comprenant autour d'un axe longitudinal (A) un rayon global de courbure final (R2), et dans au moins une section longitudinale des tronçons courbes (16, 30, 32) formant des rayons de pliage reliant des tronçons sensiblement rectilignes (2, 4, 6, 12, 20, 22), **caractérisé en ce qu'**il comporte une étape de dépose de couches successives sur une surface d'un outillage de drapage donnant une forme initiale sensiblement de révolution présentant autour de l'axe longitudinal (A) un rayon global de courbure initial (R1), puis la forme initiale comportant autour de cet axe un contour ouvert, une étape de déploiement de la préforme en augmentant le rayon global de courbure initial (R1) jusqu'au rayon global de courbure final (R2), afin de refermer les rayons de pliage des tronçons courbes (16, 30, 32).

2. Procédé de fabrication selon la revendication 1, **caractérisé en ce qu'**il comporte avant l'étape de déploiement si la forme initiale comporte autour de l'axe longitudinal (A) un contour circulaire fermé, une étape de coupe de la préforme qui donne le contour ouvert.

3. Procédé de fabrication selon la revendication 1 ou 2, **caractérisé en ce qu'**il comporte une étape préliminaire de calcul d'une couche de renfort limite au niveau d'un tronçon courbe, qui est la couche présentant dans la section longitudinale en fonction de l'orientation de ses fibres et de son positionnement dans l'épaisseur du tronçon par rapport aux autres couches de renfort, le plus faible changement de sa longueur développée lors du déploiement de la préforme.

4. Procédé de fabrication selon la revendication 1, 2 ou 3, **caractérisé en ce qu'**il comporte une étape préliminaire de calcul d'une couche de renfort limite au niveau d'un tronçon courbe, qui est la couche présentant dans la section transversale en fonction de l'orientation de ses fibres et de son positionnement dans l'épaisseur du tronçon par rapport aux autres couches de renfort, le plus faible changement de sa longueur développée lors du déploiement de la préforme.

5. Procédé de fabrication selon l'une quelconque des revendications précédentes, **caractérisé en ce que** le rapport entre le rayon global de courbure final (R2) et initial (R1) est compris entre 1,5 et 4.

6. Préforme comprenant plusieurs couches de renfort de fibres superposées, prévue pour former après cuisson d'une résine d'imprégnation une pièce en matériaux composites présentant une forme finale, **caractérisée en ce qu'**elle est fabriquée conformément à un procédé selon l'une quelconque des revendications précédentes.

7. Préforme selon la revendication 6, réalisée avec un procédé selon la revendication 3 ou 4, **caractérisée en ce que** chaque tronçon courbe (16, 30, 32) présente une longueur développée moyenne dans la section longitudinale ou transversale, sensiblement égale à la longueur développée de la couche limite associée dans cette section.

8. Préforme selon la revendication 6 ou 7, **caractérisée en ce qu'**elle comporte autour de l'axe longitudinal (A) dans la forme initiale une partie conique (22) reliée par des tronçons courbes (16) à des tronçons rectilignes (20), cette partie conique (22) se redressant pour donner dans la forme finale une partie sensiblement plane.

9. Préforme selon l'une quelconque des revendications 6 à 8, **caractérisée en ce qu'**elle comporte une épaisseur comprise entre 1 et 8mm, et des rayons de pliage des tronçons courbes compris entre 5 et 30mm.

10. Préforme selon l'une quelconque des revendications 6 à 9, **caractérisée en ce qu'**elle comporte des singularités géométriques locales, comme des bossages (14).

11. Préforme selon l'une quelconque des revendications 6 à 10, **caractérisée en ce qu'**elle comporte une forme initiale présentant un contour circulaire fermé autour de l'axe longitudinal, prévue pour donner une forme finale formant autour de cet axe un secteur inférieur ou égale à 180°.

12. Préforme selon l'une quelconque des revendications 6 à 11, **caractérisée en ce qu'**elle comporte un nombre de couches de renfort de fibres qui est variable.

13. Préforme selon l'une quelconque des revendications 6 à 12, **caractérisée en ce qu'**elle comporte au moins une couche comprenant des fibres orientées longitudinalement (O°) ou transversalement (90°).

14. Préforme selon l'une quelconque des revendications 6 à 13, **caractérisée en ce qu'**elle comporte des fibres de couches superposées présentant majoritairement des orientations de 90°, +30° et -30°, par rapport à l'orientation de 0° qui est l'angle d'un plan passant par l'axe longitudinal (A).

15. Pièce de nacelle de turboréacteur, **caractérisée en ce qu'**elle est réalisée à partir d'une préforme selon l'une quelconque des revendications 6 à 14.

16. Pièce de nacelle de turboréacteur, **caractérisée en ce qu'**elle est réalisée par superposition partielle ou totale d'au moins deux préformes selon l'une quelconque des revendications 6 à 14.

17. Pièce de nacelle de turboréacteur selon la revendication 16, **caractérisée** en ce au moins une des préformes présente une épaisseur décroissante vers l'extrémité de la zone de recouvrement avec l'autre préforme

## Patentansprüche

1. Verfahren zur Herstellung einer Vorform, die eine nicht entwickelbare Form aufweist, mehrere übereinanderliegende Faserverstärkungsschichten umfassend, um ein Teil aus Verbundmaterialien zu bilden, das eine endgültige Form aufweist, die um eine Längsachse (A) herum einen endgültigen allgemeinen Krümmungsradius (R2), und in mindestens einem Längsschnitt gekrümmte Abschnitte (16, 30, 32) umfasst, die Biegeradien bilden, welche im Wesentlichen gerade Abschnitte (2, 4, 6, 12, 20, 22) miteinander verbinden, **dadurch gekennzeichnet, dass** es einen Schritt des Abscheidens von aufeinanderfolgenden Schichten auf einer Fläche eines Auflagewerkzeugs umfasst, der eine im Wesentlichen rotationssymmetrische anfängliche Form ergibt, die um die Längsachse (A) herum einen anfänglichen allgemeinen Krümmungsradius (R1) aufweist, und anschließend, wenn die anfängliche Form um diese Achse herum eine offene Kontur umfasst, einen Schritt des Entfaltens der Vorform unter Vergrößern des anfänglichen allgemeinen Krümmungsradius (R1) bis zum endgültigen allgemeinen Krümmungsradius (R2), um die Biegeradien der gekrümmten Abschnitte (16, 30, 32) zu schließen.

2. Herstellungsverfahren nach Anspruch 1, **dadurch gekennzeichnet, dass** es vor dem Schritt des Entfaltens, wenn die anfängliche Form um die Längsachse (A) herum eine geschlossene kreisförmige Kontur umfasst, einen Schritt des Schneidens der Vorform umfasst, der die offene Kontur ergibt.

3. Herstellungsverfahren nach Anspruch 1 oder 2, **dadurch gekennzeichnet, dass** es einen vorausgehenden Schritt des Berechnens einer Grenzverstärkungsschicht im Bereich eines gekrümmten Abschnitts umfasst, die diejenige Schicht ist, die im Längsschnitt abhängig von der Ausrichtung ihrer Fasern und ihrer Positionierung in der Dicke des Abschnitts im Verhältnis zu den anderen Verstärkungsschichten die geringste Veränderung ihrer bei der Entfaltung der Vorform entwickelten Länge aufweist.

4. Herstellungsverfahren nach Anspruch 1, 2 oder 3, **dadurch gekennzeichnet, dass** es einen vorausgehenden Schritt des Berechnens einer Grenzverstärkungsschicht im Bereich eines gekrümmten Abschnitts umfasst, die diejenige Schicht ist, die im Querschnitt abhängig von der Ausrichtung ihrer Fasern und ihrer Positionierung in der Dicke des Abschnitts im Verhältnis zu den anderen Verstärkungsschichten die geringste Veränderung ihrer bei der Entfaltung der Vorform entwickelten Länge aufweist.

5. Herstellungsverfahren nach einem der vorstehenden Ansprüche, **dadurch gekennzeichnet, dass** das Verhältnis zwischen dem endgültigen (R2) und anfänglichen allgemeinen Krümmungsradius (R1) zwischen 1,5 und 4 beträgt.

6. Mehrere übereinanderliegende Faserverstärkungsschichten umfassende Vorform, die dafür vorgesehen ist, nach Aushärten eines Imprägnierharzes ein Teil aus Verbundmaterialien zu bilden, das eine endgültige Form aufweist, **dadurch gekennzeichnet, dass** sie gemäß einem Verfahren nach einem der vorstehenden Ansprüche hergestellt wird.

7. Vorform nach Anspruch 6, die mit einem Verfahren nach Anspruch 3 oder 4 ausgeführt wird, **dadurch gekennzeichnet, dass** jeder gekrümmte Abschnitt (16, 30, 32) eine mittlere entwickelte Länge im Längs- oder Querschnitt aufweist, die im Wesentlichen gleich der entwickelten Länge der zugehörigen Grenzschicht in diesem Schnitt ist.

8. Vorform nach Anspruch 6 oder 7, **dadurch gekennzeichnet, dass** sie in der anfänglichen Form um die Längsachse (A) herum ein kegelförmiges Stück (22) umfasst, das über gekrümmte Abschnitte (16) mit geraden Abschnitten (20) verbunden ist, wobei sich dieses kegelförmige Stück (22) begradigt, um in der endgültigen Form ein im Wesentlichen ebenes Stück zu ergeben.

9. Vorform nach einem der Ansprüche 6 bis 8, **dadurch gekennzeichnet, dass** sie eine Dicke zwischen 1 und 8 mm, und Biegeradien der gekrümmten Abschnitte zwischen 5 und 30 mm umfasst.

10. Vorform nach einem der Ansprüche 6 bis 9, **dadurch gekennzeichnet, dass** sie örtliche geometrische Besonderheiten, wie etwa Erhebungen (14) umfasst.

11. Vorform nach einem der Ansprüche 6 bis 10, **dadurch gekennzeichnet, dass** sie eine anfängliche Form umfasst, die um die Längsachse herum eine geschlossene kreisförmige Kontur aufweist, die dafür vorgesehen ist, eine endgültige Form zu ergeben, die um diese Achse herum einen Sektor von kleiner als oder gleich 180° bildet.

12. Vorform nach einem der Ansprüche 6 bis 11, **dadurch gekennzeichnet, dass** sie eine Anzahl von Faserverstärkungsschichten umfasst, die variabel ist.

13. Vorform nach einem der Ansprüche 6 bis 12, **dadurch gekennzeichnet, dass** sie mindestens eine Schicht umfasst, die längs (0°) oder quer (90°) ausgerichtete Fasern umfasst.

14. Vorform nach einem der Ansprüche 6 bis 13, **dadurch gekennzeichnet, dass** sie Fasern von übereinanderliegenden Schichten umfasst, die überwiegend Ausrichtungen von 90°, +30° und -30° im Verhältnis zur 0°-Ausrichtung aufweisen, welche der Winkel einer durch die Längsachse (A) verlaufenden Ebene ist.

15. Triebwerksgondelteil, **dadurch gekennzeichnet, dass** es auf Grundlage einer Vorform nach einem der Ansprüche 6 bis 14 ausgeführt ist.

16. Triebwerksgondelteil, **dadurch gekennzeichnet, dass** es durch teilweises oder vollständiges Übereinanderliegen von mindestens zwei Vorformen nach einem der Ansprüche 6 bis 14 ausgeführt ist.

17. Triebwerksgondelteil nach Anspruch 16, **dadurch gekennzeichnet, dass** mindestens eine der Vorformen eine zum Ende des Überlappungsbereichs mit der anderen Vorform hin eine abnehmende Dicke aufweist.

## Claims

1. A method for manufacturing a preform having a non-developable shape, comprising several superimposed fiber reinforcement layers to form a part made of a composite material having a final shape comprising, about a longitudinal axis (A), a final overall radius of curvature (R2), and, in at least one longitudinal section, curved segments (16, 30, 32) forming folding radius connecting substantially rectilinear segments (2, 4, 6, 12, 20, 22), **characterized in that** it includes a step of laying successive layers over a surface of a drape-molding tooling generating an initial shape substantially of revolution having about the longitudinal axis (A) an initial overall radius of curvature (R1), then, the initial shape including about this axis an open contour, a step of deploying the preform by enlarging the initial overall radius of curvature (R1) up to the final overall radius of curvature (R2), in order to close the folding radii of the curved segments (16, 30, 32).

2. The manufacturing method according to claim 1, **characterized in that** it includes, before the deployment step, if the initial shape includes about the longitudinal axis (A) a closed circular contour, a step of cutting the preform which generates the open contour.

3. The manufacturing method according to claim 1 or 2, **characterized in that** it includes a preliminary step of calculating a boundary reinforcement layer at a curved segment, which is the layer having, in the longitudinal section according to the orientation of its fibers and its positioning across the thickness of the segment with respect to the other reinforcement layers, the smallest change in its length developed during the deployment of the preform.

4. The manufacturing method according to claim 1, 2 or 3, **characterized in that** it includes a preliminary step of calculating a boundary reinforcement layer at a curved segment, which is the layer having, in the transverse section according to the orientation of its fibers and its positioning across the thickness of the segment with respect to the other reinforcement layers, the smallest change in its length developed during the deployment of the preform.

5. The manufacturing method according to any one of the preceding claims, **characterized in that** the ratio between the final (R2) and initial (R1) overall radius of curvature is comprised between 1.5 and 4.

6. A preform comprising several superimposed fiber reinforcement layers, intended to form, after curing of an impregnating resin, a part made of composite materials having a final shape, **characterized in that** it is manufactured in accordance with a method according to any one of the preceding claims.

7. The preform according to claim 6, made with a manufacturing method according to claim 3 or 4, **characterized in that** each curved segment (16, 30, 32) has an average developed length in the longitudinal or transversal section, substantially equal to the developed length of the associated boundary layer in this section.

8. The preform according to claim 6 or 7, **characterized in that** it includes about the longitudinal axis (A) in the initial shape a conical portion (22) connected by curved segments (16) to rectilinear segments (20), this conical portion (22) straightening to give in the final shape a substantially planar portion.

9. The preform according to any one of claims 6 to 8, **characterized in that** it includes a thickness comprised between 1 and 8mm, and folding radius of the curved segments comprised between 5 and 30mm.

10. The preform according to any one of claims 6 to 9, **characterized in that** it includes local geometrical singularities, such as bosses (14).

11. The preform according to any one of claims 6 to 10, **characterized in that** it includes an initial shape having a closed circular contour around the longitudinal axis, intended to generate a final shape forming about this axis a sector smaller than or equal to 180°.

12. The preform according to any one of claims 6 to 11, **characterized in that** it includes a variable number of fiber reinforcement layers.

13. The preform according to any one of claims 6 to 12, **characterized in that** it includes at least one layer comprising fibers oriented longitudinally (0°) or transversely (90°).

14. The preform according to any one of claims 6 to 13, **characterized in that** it includes fibers of superimposed layers predominantly having 90°, +30° and - 30° orientations, with respect to the 0° orientation which is the angle of a plane passing through the longitudinal axis (A).

15. A part of a turbojet engine nacelle, **characterized in that** it is made from a preform according to any one of claims 6 to 14.

16. A part of a turbojet engine nacelle, **characterized in that** it is made by partially or totally superimposing at least two preforms according to any one of claims 6 to 14.

17. The part of a turbojet engine nacelle according to claim 16, **characterized in that** at least one of the preforms has a decreasing thickness towards the end of the overlap zone with the other preform.
